(19) Europäisches Patentamt European Patent Office Office européen des brevets

(11) **EP 4 691 984 A1**

(12) **EUROPEAN PATENT APPLICATION**
published in accordance with Art. 153(4) EPC

(43) Date of publication:
**11.02.2026 Bulletin 2026/07**

(21) Application number: **24784959.9**

(22) Date of filing: **04.04.2024**

(51) International Patent Classification (IPC):
**C01B 39/38** (2006.01) **C01B 39/36** (2006.01)
**B01J 20/18** (2006.01)

(52) Cooperative Patent Classification (CPC):
**C01B 39/36; C01B 39/38; C01B 39/40;** B01J 20/18

(86) International application number:
**PCT/JP2024/013952**

(87) International publication number:
**WO 2024/210177 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.04.2023 JP 2023062985**
**22.11.2023 JP 2023198053**

(71) Applicant: **Tosoh Corporation**
**Yamaguchi 746-8501 (JP)**

(72) Inventors:
• **SHINODA, Miyuki**
**Shunan-shi Yamaguchi 746-8501 (JP)**
• **MISHIMA, Takayoshi**
**Shunan-shi Yamaguchi 746-8501 (JP)**
• **FUKUI, Megu**
**Shunan-shi Yamaguchi 746-8501 (JP)**

(74) Representative: **TBK**
**Bavariaring 4-6**
**80336 München (DE)**

(54) **MFI ZEOLITE AND METHOD FOR PRODUCING SAME**

(57) It is an object to provide at least one of: an MFI zeolite that can be produced without requiring the use of a dispersant or grinding, has high adsorption performance for organic compounds and can be formed into a zeolite slurry with good handleability; a method for producing the MFI zeolite; and an adsorbent containing the MFI zeolite.

EP 4 691 984 A1

## Description

Technical Field

The present disclosure relates to an MFI zeolite and a method for producing the same.

Background Art

MFI zeolites are widely used as adsorbents for organic compounds in various industrial fields. Generally, when an MFI zeolite is used as an adsorbent, it is preferable to reduce the primary particle size and increase the specific surface area, from the viewpoint of increasing adsorption efficiency. For example, PTL 1 discloses a pentasil zeolite, which is an MFI zeolite suitable for an adsorbent. This pentasil zeolite is obtained using normal propylamine as a structure-directing agent and has a primary particle size of about 1 $\mu$m.

When the primary particle size is about 5 $\mu$m or less, the primary particles tend to aggregate and form coarse secondary particles. In this case, the viscosity of a zeolite slurry to be formed increases, and its handleability deteriorates.

Some known methods for reducing the particle size of zeolite particles, particularly secondary particles, contained in a slurry include a method in which a dispersant such as an organic material is added to the zeolite slurry (e.g., PTL 2) and a method in which a zeolite powder is ground.

Citation List

Patent Literature

PTL 1: Japanese Unexamined Patent Application Publication No. 2021-11422
PTL 2: Japanese Unexamined Patent Application Publication No. 2004-67976

Summary of Invention

Technical Problem

With the MFI zeolite disclosed in PTL 1, aggregation of the primary particles is significant, and coarse particles are formed. Therefore, it was not possible to obtain an MFI zeolite powder with a small average particle size.

In the method disclosed in PTL 2, a dispersant is added. However, this method is unpreferred because the dispersant has an influence on the adsorption characteristics of the MFI zeolite.

In the other method, the MFI zeolite is ground to reduce its particle size. However, in the grinding process, the crystallinity of the zeolite deteriorates as the particle size decreases, resulting in a reduction in adsorption performance.

It is an object of the present disclosure to provide at least one of: an MFI zeolite that can be produced without requiring the use of a dispersant or grinding and has a small average particle size and high adsorption performance for organic compounds; a method for producing the MFI zeolite; and an adsorbent containing the MFI zeolite. Solution to Problem

In the present disclosure, an MFI zeolite production method has been studied, which does not use grinding and dispersants and can produce an MFI zeolite that can be formed into a zeolite slurry with good handleability. Consequently, it has been found that, by controlling the pressure inside a sealed vessel during the step of crystallizing raw materials, an MFI zeolite having a small average particle size and high adsorption performance for organic compounds that are unattainable with conventional production methods can be directly crystallized.

Specifically, the present invention is as described in the claims, and the present disclosure is summarized as follows.

[1] An MFI zeolite, wherein the MFI zeolite has a volume-based cumulative particle size distribution with a D50 of 0.5 $\mu$m or more and 5.0 $\mu$m or less, and wherein, in a powder X-ray diffraction pattern of the MFI zeolite, a ratio of a height of a (020) plane peak to a height of a (101) plane peak is 65% or more and 95% or less.

[2] The MFI zeolite according to [1], wherein a molar ratio of silica to alumina is 50 or more and 3000 or less.

[3] The MFI zeolite according to [1] or [2], wherein the MFI zeolite has a monomodal volume-based frequency particle size distribution curve.

[4] The MFI zeolite according to any one of [1] to [3], wherein the MFI zeolite has a volume-based particle size distribution with a standard deviation of 10 $\mu$m or less.

[5] The MFI zeolite according to any one of [1] to [4], wherein the MFI zeolite has an average crystal size of 0.1 $\mu$m or more and 5.0 $\mu$m or less.

[6] The MFI zeolite according to any one of [1] to [5], wherein the MFI zeolite has a BET specific surface area of 300 $m^2$/g or more.

[7] A method for producing the MFI zeolite according to any one of [1] to [6], the method comprising the step of subjecting a composition containing a silica source, an alumina source, an alkali source, normal butylamine and water to hydrothermal treatment at 100°C or higher and 150°C or lower and 0.15 MPa or higher and then to hydrothermal treatment at 100°C or higher and 150°C or lower while pressure is reduced at a pressure reduction rate of 0.10 MPa/hour or higher.

Advantageous Effects of Invention

The present disclosure can provide at least one of: an MFI zeolite that can be produced without requiring the method in which a dispersant is added or the method in which a zeolite powder is ground, has high adsorption performance for organic compounds, and can be formed into a zeolite slurry with good handleability; and a method for producing the MFI zeolite.

Description of Embodiments

The MFI zeolite of the present disclosure will be described by way of examples of embodiments. The present disclosure encompasses any combination of the structures and parameters disclosed in the present description and also encompasses any combination of the upper limits and lower limits disclosed in the present description. The terms used in the embodiments are as follows.

"Aluminosilicate" is a complex oxide having a structure including repeating network units in which aluminum (Al) and silicon (Si) are linked through oxygen (O).
Aluminosilicates include "crystalline aluminosilicates" that exhibit crystalline XRD peaks in their powder X-ray diffraction (hereinafter referred to also as "XRD") patterns and "amorphous aluminosilicates" that exhibit no crystalline XRD peaks.

In the embodiments, the XRD pattern is obtained by XRD measurement under the following conditions.

Acceleration current-voltage: 40 mA-40 kV
Radiation source: CuK$\alpha$ line ($\lambda$ = 1.5405 Å)
Measurement mode: Continuous scanning
Scanning condition: 10°/minute
Measurement range: $2\theta$ = 5° to 40°
Divergence height limiting slit: 10 mm
Divergence/incident slit: 1°
Scattering slit: Open
Receiving slit: Open
Detector: Semiconductor detector (D/teX Ultra 2)
Filter: Not used

The XRD pattern can be measured using a general X-ray diffraction device (e.g., device name: Ultima IV manufactured by RIGAKU Corporation). The crystalline XRD peaks are peaks identified by detecting the $2\theta$ values of their corresponding peak tops in the XRD pattern analysis using general analysis software. One example of the crystalline XRD peak is an XRD peak with a half width of $2\theta$ = 0.10° or less.

"Zeolites" are compounds having a regular structure in which framework atoms (which are hereinafter referred to also as "T atoms") are regularly arranged with oxygen (O) therebetween and are compounds in which each T atom is at least one of a metal atom or a semimetal atom. The metal atom is, for example, at least one selected from the group consisting of aluminum (Al), titanium (Ti), iron (Fe), zinc (Zn), gallium (Ga) and tin (Sn) and is preferably aluminum. The semimetal is, for example, at least one selected from the group consisting of boron (B), silicon (Si), germanium (Ge), arsenic (As), antimony (Sb) and tellurium (Te) and is preferably silicon.

"Zeolite analogs" are compounds having a regular structure in which T atoms are regularly arranged with oxygen therebetween and at least some of the T atoms are atoms other than metals and semimetals. Examples of the zeolite analogs include composite phosphorus compounds containing phosphorus (P) as T atoms such as aluminophosphates (AlPOs) and silicoaluminophosphates (SAPOs).

The "framework structure" of each of the zeolites and the zeolite analogs (this structure is hereinafter referred to also as the "zeolite structure") is a framework structure designated by a framework structure code assigned by the Structure Commission of the International Zeolite Association (this framework structure code may be hereinafter referred to simply as a "structure code"). For example, the MFI structure is a framework structure designated by the structure code "MFI." The MFI structure can be identified by comparison with the XRD pattern of a zeolite structure described in Zeolite Framework Type MFI at the homepage of the Structure Commission of the IZA (http://www.iza-structure.org/databases/) (this XRD pattern is hereinafter referred to also as a "reference pattern"). Regarding the zeolite structures, the terms "framework structure," "crystal structure" and "crystalline phase" are used interchangeably.

In the embodiments, an "XXX zeolite" such as the "MFI zeolite" is a zeolite having a zeolite structure designated by the corresponding structure code and is preferably a crystalline aluminosilicate having the zeolite structure designated by the corresponding structure code. The zeolite having the zeolite structure designated by the structure code "MFI" is any zeolite having XRD peaks corresponding to those of the MFI zeolite structure in its XRD pattern and is preferably a zeolite having at least XRD peaks identified as the MFI zeolite structure.

The peaks in the XRD pattern of the MFI zeolite can be indexed to lattice (hkl) planes (h, k and l are integers) by comparison with the reference pattern.

The "average crystal size" is the average value of the particle sizes of primary particles, and the primary particles are smallest independent particles that are observable under a scanning electron microscope (which is hereinafter referred to also as an "SEM") under the following conditions. The SEM observation may be performed using a general scanning electron microscope (e.g., device name: JSM-IT200 manufactured by JEOL Ltd.).

Acceleration voltage: 6 kV
Magnification: 10,000±5,000X

The average crystal size is determined as follows. First, 100±10 primary particles having continuous outlines in an SEM observation image are extracted. Then the largest diameters of the extracted primary particles are measured, and the average of the measured diameters is determined and used as the average crystal size. The number of SEM observation images may be such that the number of observable primary particles is at least the number described above, and one or a plurality of SEM observation images may be used.

"D10," "D50" and "D90" are a particle size [$\mu$m] at a cumulative particle size frequency of 10% in a volume-based cumulative particle size distribution, a particle size [um] at a cumulative particle size frequency of 50% and a particle size [$\mu$m] at a cumulative particle size frequency of 90%, respectively. D50 is used interchangeably with the term "median size."

The volume-based cumulative particle size distribution, volume-based frequency particle size distribution, D10, D50 and D90 of the MFI zeolite may be measured using a general laser diffraction-scattering particle size distribution measurement device (e.g., device name; Microtrac MT3300 EXII manufactured by MicrotracBEL Corp.) under the following conditions.

Measurement range: 0.02 to 2000 $\mu$m
Refractive index of particles: 1.66
Transparency of particles: Transparent
Shape of particles: Non-spherical
Refractive index of solvent: 1.333

The term "solid concentration" means the mass ratio of the zeolite in a slurry and is a concentration determined by the following formula.

```
Solid concentration [% by mass]

      = (mass of zeolite [g] / mass of slurry [g]) × 100
```

The mass of the slurry in the above formula is a value obtained by measuring the mass of the slurry. The mass of the zeolite is a value measured by drying the slurry used for the measurement of the mass of the slurry to obtain solids, treating the solids in air at 600°C for 1 hour, and measuring the mass of the solids.

An MFI zeolite in an embodiment will be described.

The MFI zeolite in the present embodiment has a D50 of 0.5 $\mu$m or more and 5.0 $\mu$m or less, and the ratio of the height of the (020) plane peak to the height of the (101) plane peak in a powder X-ray diffraction pattern (the ratio is hereinafter referred to also as the "(020)/(101) peak ratio") is 65% or more and 95% or less.

In the MFI zeolite in the present embodiment, the D50 is 0.5 $\mu$m or more and 5.0 $\mu$m or less. If the D50 of the MFI zeolite is less than 0.5 $\mu$m, the viscosity of a slurry prepared using the MFI zeolite is high, and its handleability (its ease of use) is significantly low. If the D50 exceeds 5.0 μm, the viscosity of the slurry at a high shear rate tends to increase, and the flowability decreases. The D50 of the MFI zeolite in the present embodiment may be 1.0 μm or more or 1.5 μm or more, may be 3.0 μm or less, and is preferably 1.0 μm or more and 3.0 μm or less and more preferably 1.5 μm or more and 3.0 μm or less.

Preferably, the volume-based frequency particle size distribution curve of the MFI zeolite in the present embodiment is monomodal. In the present embodiment, when the volume-based frequency particle size distribution curve is monomodal, the volume-based frequency particle size distribution curve is a distribution having a single-peak shape. In other words, the volume-based frequency particle size distribution curve obtained by measuring the volume-based cumulative particle size distribution is a curve having a shape with one peak and preferably a curve having a shape in which the particle size frequency in the volume-based frequency particle size distribution curve has only one inflection point.

In the MFI zeolite in the present embodiment, the standard deviation of the volume-based particle size distribution (which is hereinafter referred to simply as the "standard deviation") is preferably 10 μm or less. In the MFI zeolite in the present embodiment, the standard deviation may be 7 μm or less or 5 μm or less, may be more than 0 μm or 0.5 μm or more, is preferably more than 0 μm and 7 μm or less and more preferably 0.5 μm or more and 5 μm or less. When the standard deviation is within the above range, the viscosity of the slurry prepared using the MFI zeolite in the present embodiment is unlikely to increase.

The "standard deviation" in the present embodiment is a value obtained by dividing the difference between the D90 and D10 in the volume-based cumulative particle size distribution by 2 and can be determined by the following formula.

$$\texttt{Standard deviation [μm] = (D90 [μm] - D10 [μm]) / 2}$$

In the MFI zeolite in the present embodiment, the

(020)/(101) peak ratio in its XRD pattern is 65% or more and 95% or less. If the (020)/(101) peak ratio is outside the above range, the adsorbed amount of organic compounds is small. When the MFI zeolite is subjected to a procedure such as grinding in which a strong stress is applied to the particles, the (020)/(101) peak ratio tends to increase. This may be because of the reduction in the crystallinity of the MFI zeolite, and therefore the adsorbed amount of organic compounds tends to be small. Accordingly, in the MFI zeolite in the present embodiment, the (020)/(101) peak ratio may be 70% or more or 75% or more, may be 85% or less, and is preferably 70% or more and 85% or less and more preferably 75% or more and 85% or less.

In the MFI zeolite in the present embodiment, the ratio of the height of the (101) plane peak to the height of the (501) plane peak in the XRD pattern (this ratio is hereinafter referred to also as the "(101)/(501) peak ratio") is preferably 50% or more and 140% or less. The

(101)/(501) peak ratio is considered to be a value derived from oxygen 10-membered rings in the framework structure of the MFI zeolite, and the value of the (101)/(501) peak ratio tends to increase when the structure-directing agent

(hereinafter referred to also as the "SDA") and alkali metal elements in the oxygen 10-membered rings are removed in a structure-directing agent removing step and a cation exchange step described later. In the MFI zeolite in the present embodiment, the (101)/(501) peak ratio may be 80% or more or 90% or more, may be 140% or less or 110% or less, and is preferably 80% or more and 140% or less and more preferably 90% or more and 110% or less because the adsorbed amount of organic compounds at an equilibrium pressure of 0.01 kPa or higher tends to increase.

In the present embodiment, the "(101) plane peak" is an XRD peak corresponding to an interplanar spacing d of 11.10±0.50 Å in the XRD pattern of the MFI zeolite. The "(020) plane peak" is an XRD peak corresponding to an interplanar spacing d of 9.97±0.10 Å in the XRD pattern of the MFI zeolite. The "(501) plane peak" is an XRD peak corresponding to an interplanar spacing d of 3.87±0.03 Å in the XRD pattern of the MFI zeolite.

In the XRD pattern of the MFI zeolite, its crystal structure is not characterized by each of the independent XRD peaks but characterized by one XRD pattern including a group of a plurality of XRD peaks having specific relative intensities. Differences in interplanar spacings and relative intensities of XRD peaks indicate different crystal structures. Therefore, the crystal structure of the MFI zeolite in the present embodiment can be identified from the group of XRD peaks having corresponding relative intensities. When the crystal structure changes, the interplanar spacings and relative intensities of the XRD peaks change.

The MFI zeolite in the present embodiment has XRD peaks specific to the MFI structure in the XRD pattern, and it is preferable that the XRD pattern includes at least the following XRD peaks.

[Table 1]

| Interplanar spacing d (Å) | Relative intensity (%) |
|---|---|
| 11.10±0.50 | 50~140 |

(continued)

| Interplanar spacing d (Å) | Relative intensity (%) |
|---|---|
| 9.97±0.10 | 40~120 |
| 3.87±0.03 | 100 |
| 3.80±0.03 | 60~110 |
| 3.70±0.03 | 30~60 |
| * Relative intensity is relative value with respect to peak intensity at d = 3.87±0.03 Å | |

In the present embodiment, it is only necessary that the XRD pattern include at least the XRD peaks in the above table, and the XRD pattern may include other XRD peaks attributed to the MFI structure.
It is more preferable that the XRD pattern of the MFI zeolite in the present embodiment includes at least the following XRD peaks.

[Table 2]

| Interplanar spacing d (Å) | Relative intensity (%) |
|---|---|
| 11.10±0.50 | 80~140 |
| 9.97±0.10 | 75~120 |
| 3.87±0.03 | 100 |
| 3.80±0.03 | 75~100 |
| 3.70±0.03 | 30~55 |
| * Relative intensity is relative value with respect to peak intensity at d = 3.87±0.03 Å | |

It is still more preferable that the XRD pattern of the MFI zeolite in the present embodiment includes at least the following XRD peaks.

[Table 3]

| Interplanar spacing d (Å) | Relative intensity (%) |
|---|---|
| 11.10±0.30 | 90~110 |
| 9.97±0.10 | 75~90 |
| 9.70±0.10 | 30~50 |
| 5.98±0.10 | 15~40 |
| 3.87±0.03 | 100 |
| 3.80±0.03 | 80~100 |
| 3.70±0.03 | 30~50 |
| * Relative intensity is relative value with respect to peak intensity at d = 3.87±0.03 Å | |

The MFI zeolite in the present embodiment may include, in addition to the peaks described above, XRD peaks with a relative intensity of less than 1%. However, these small intensity XRD peaks need not be considered in identifying the crystal structure.
In the MFI zeolite in the present embodiment, the molar ratio of silica to alumina (which is hereinafter referred to also as the "$SiO_2/Al_2O_3$ ratio") is preferably 50 or more and 3000 or less. When the value of the $SiO_2/Al_2O_3$ ratio is as described above, the adsorption performance for organic compounds tends to be high. In the MFI zeolite in the present embodiment, the $SiO_2/Al_2O_3$ ratio is preferably 100 or more and 3000 or less, more preferably 1000 or more and 3000 or less and still more preferably 2000 or more and 3000 or less because the adsorption characteristics for organic compounds tend to be high even in the presence of water. However, from the viewpoint of increasing the adsorbed amount of organic compounds, the $SiO_2/Al_2O_3$ ratio in the MFI zeolite in the present embodiment is preferably 50 or more and 2000 or less, more preferably 100 or more and 1000 or less and still more preferably 170 or more and 500 or less.

In the MFI zeolite in the present embodiment, the ratio of the content of an alkali metal (M) (which is hereinafter referred to also as the "alkali metal content") to the sum of the content of silicon (Si), the content of aluminum (Al), and the content of the alkali metal (the sum is hereinafter referred to also as the "metal content") in the MFI zeolite may be 0% by mass or more or more than 0% by mass, may be 0.5% by mass or less or 0.1% by mass or less, and is preferably 0% by mass or more and 0.5% by mass or less, more preferably more than 0% by mass and 0.1% by mass or less and still more preferably 0% by mass or more and 0.05% by mass or less, because the adsorbed amount of organic compounds tends to increase.

When the MFI zeolite contains two or more alkali metal elements, the alkali metal content may be the sum of the contents of these metal elements. For example, when the alkali metal elements include sodium (Na) and potassium (K), the alkali metal content may be the ratio of the total content of sodium and potassium with respect to the metal content of the MFI zeolite (which is hereinafter referred to also as the "(Na + K) content") and may be determined as follows.

$$(Na + K) \text{ content [% by mass]} = \{(Na + K) [g] / (Si + Al + Na + K) [g]\} \times 100$$

The $SiO_2/Al_2O_3$ ratio and the alkali metal content are determined as follows. The MFI zeolite is dissolved in an aqueous solution mixture of hydrofluoric acid and nitric acid to prepare a sample solution, and the sample solution is subjected to inductively coupled plasma emission spectroscopic analysis (ICP-AES) using a general ICP device (e.g., device name: OPTIMA 5300DV manufactured by PerkinElmer) to obtain measurement values for Si, Al and M. The $SiO_2/Al_2O_3$ ratio and the alkali metal content are determined from the obtained measurement values.

The MFI zeolite in the present embodiment may contain an SDA so long as the adsorption performance for organic compounds is not influenced. For example, the mass ratio of the SDA contained in the MFI zeolite when the total mass (weighed value) of the MFI zeolite containing the SDA is set to 100% by mass (this ratio is hereinafter referred to also as the "SDA content") is 0% by mass or more and less than 6.0% by mass.

In the MFI zeolite in the present embodiment, the average crystal size may be 0.1 $\mu$m or more, 0.5 $\mu$m or more or 1.0 $\mu$m or more, may be 5.0 $\mu$m or less, 3.0 $\mu$m or less or 1.5 $\mu$m or less and is preferably 0.1 $\mu$m or more and 5.0 $\mu$m or less, more preferably 0.5 $\mu$m or more and 3.0 $\mu$m or less and still more preferably 1.0 $\mu$m or more and 1.5 $\mu$m or less. When the value of the average crystal size of the MFI zeolite is as described above, a slurry prepared using the MFI zeolite in the present embodiment tends to exhibit a low viscosity irrespective of a shear rate.

The average crystal size is the average size of the primary particles of the MFI zeolite and differs from the average sizes, such as D10, D50 and D90, of secondary particles including aggregated particles. When the volume-based frequency particle size distribution curve is a monomodal volume-based particle size distribution, the average crystal size tends to be larger than D10 and smaller than D90. In the MFI zeolite in the present embodiment, it is preferable that D10 < the average crystal size < D90 (unit: $\mu$m) is satisfied, and it is more preferable that the volume-based frequency particle size distribution curve is a monomodal volume-based particle size distribution and that D10 < the average crystal size < D90 (unit: $\mu$m) is satisfied.

The BET specific surface area of the MFI zeolite in the present embodiment is preferably 300 $m^2/g$ or more.

The BET specific surface area of the MFI zeolite in the present embodiment may be 330 $m^2/g$ or more or 350 $m^2/g$ or more, may be 800 $m^2/g$ or less or 500 $m^2/g$ or less, and is preferably 330 $m^2/g$ or more and 800 $m^2/g$ or less and more preferably 350 $m^2/g$ or more and 500 $m^2/g$ or less, because the adsorbed amount of organic compounds tends to be large.

The BET specific surface area can be determined by measurement in accordance with JIS Z 8830:2013. Specifically, the BET specific surface area of a measurement sample may be measured by a one point method using a general automatic specific surface area measuring device (e.g., device name: BELSORP-mini II manufactured by MicrotracBEL Corp.) and nitrogen as adsorption gas. The measurement sample may be subjected to pretreatment. Specifically, the measurement sample may be held in a vacuum atmosphere (10 Pa or lower) at $350\pm50°C$ for 1 hour or longer and 5 hours or shorter.

The crystallinity of the MFI zeolite in the present embodiment is higher than that of conventional crystallized MFI zeolites. However, the viscosity of a slurry prepared using the MFI zeolite in the present embodiment is low. For example, when the MFI zeolite in the present embodiment and pure water serving as a solvent are used to prepare a slurry with a solid concentration of 51% by mass, the viscosity at a shear rate of 1100 $s^{-1}$ is, for example, 50 mPa·s or less, 30 mPa·s or less or 20 mPa·s or less. The lower the viscosity, the better. When the viscosity at a shear rate of 1100 $s^{-1}$ is 1 mPa·s or more or 3 mPa·s or more, the flowability is suitable for application to a carrier for the adsorbent.

In the present embodiment, the viscosity at a shear rate of 1100 $s^{-1}$ can be measured using a general viscometer (e.g., device name: MCR 92 manufactured by Anton Paar) by the following method. The MFI zeolite is mixed with pure water to prepare a zeolite slurry with a solid concentration of 51% by mass, and the zeolite slurry is used as a sample slurry. 2 mL of the sample slurry is dropped onto a stage of the measurement device with a flat plate-type measurement jig (PP50) attached thereto, and then the viscosity is measured at a shear rate of 1100 $s^{-1}$. In the measurement, the stage temperature is adjusted to 20°C, and the gap between the measurement jig and the stage is adjusted to 0.2 mm.

In the MFI zeolite in the present example, the adsorbed amount of toluene with respect to the mass of the zeolite at an equilibrium pressure of 0.005 kPa (this adsorbed amount is hereinafter referred to also as the "toluene adsorption amount") is preferably 5.0% by mass or more, more preferably 5.5% by mass or more and still more preferably 6.0% by mass or more. The toluene adsorption amount at an equilibrium pressure of 0.01 kPa is preferably 5.0% by mass or more, more preferably 6.0% by mass or more and still more preferably 7.0% by mass or more. The toluene adsorption amount at an equilibrium pressure of 0.1 kPa is preferably 6.0% by mass or more, more preferably 7.0% by mass or more and still more preferably 8.0% by mass or more. The toluene adsorption amount at an equilibrium pressure of 1 kPa is preferably 8.0% by mass or more, more preferably 8.5% by mass or more and still more preferably 9.0% by mass or more. The higher the toluene adsorption amount at each equilibrium pressure, the better. However, the physical upper limit of the toluene adsorption amount is 25.0% by mass or less or 20.0% by mass or less. Moreover, it is preferable that the values of the toluene adsorption ability at equilibrium pressures of 0.005 kPa, 0.01 kPa, 0.1 kPa and 1 kPa are as described above.

The toluene adsorption amount may be measured using a general vapor adsorption measurement device (e.g., device name: BELSORP-max II manufactured by MicrotracBEL Corp.) by the following method. The MFI zeolite is subjected to pretreatment. Specifically, $20\pm10$ mg of the MFI zeolite is placed in a 11 cm$^3$ sample tube and held in a vacuum atmosphere (10 Pa or lower) at $350\pm50°C$ for 1 hour or longer and 5 hours or shorter to prepare a measurement sample. The sample tube containing the measurement sample is placed in the vapor adsorption measurement device, and the equilibrium pressure is changed from 0.001 kPa to 1 kPa at 25°C to measure the toluene adsorption amounts [% by mass] at 0.005 kPa, 0.01 kPa, 0.1 kPa and 1 kPa.

The MFI zeolite in the present embodiment is preferably an aluminosilicate and more preferably a crystalline aluminosilicate. Therefore, it is preferable that the MFI zeolite in the present embodiment contains no phosphorus, and it is more preferable that the MFI zeolite contains no phosphorus (P) as T atoms. The content of phosphorus in the MFI zeolite in the present embodiment is preferably 100 ppm by mass or less or 1 ppm by mass or less, is preferably 0 ppm by mass or more or more than 0 ppm by mass, and is, for example, 0 ppm by mass or more and 100 ppm by mass or less, 0 ppm by mass or more and 1 ppm by mass or less, or more than 0 ppm by mass and 1 ppm by mass or less.

Next, a method for producing the MFI zeolite in the present embodiment will be described.

The method for producing the MFI zeolite in the present embodiment is a production method including the step of subjecting a composition containing a silica source, an alumina source, an alkali source, normal butylamine and water (this composition is hereinafter referred to also as a "raw material composition") to hydrothermal treatment at 100°C or higher and 150°C or lower and 0.15 MPa or higher and then to hydrothermal treatment at 100°C or higher and 150°C or lower while the pressure is reduced at a pressure reduction rate of 0.10 MPa/hour or higher (this step is hereinafter referred to also as the "crystallization step"). Through the crystallization step, the MFI zeolite in the present embodiment is obtained as a crystallized product formed from the raw material composition.

The silica source is at least one of a silicon-containing compound and silicon (Si) and is, for example, at least one selected from the group consisting of silica sol, fumed silica, colloidal silica, precipitated silica, sodium silicate, potassium silicate, amorphous silica, crystalline aluminosilicate and amorphous aluminosilicate. From the viewpoint that the D50 of the crystallized MFI zeolite is unlikely to be large, the silica source is preferably at least one of amorphous silica and amorphous aluminosilicate and is more preferably amorphous aluminosilicate.

The alumina source is an aluminum compound and is, for example, at least one selected from the group consisting of aluminum hydroxide, aluminum oxide, aluminum sulfate, sodium aluminate, aluminum chloride and amorphous aluminosilicate. From the viewpoint that the D50 of the crystallized MFI zeolite is unlikely to be large, the alumina source is preferably at least one selected from the group consisting of aluminum oxide, aluminum sulfate, sodium aluminate and amorphous aluminosilicate. From the viewpoint of reactivity, the alumina source is more preferably at least one of aluminum sulfate and amorphous aluminosilicate and is still more preferably amorphous aluminosilicate.

Particularly preferably, the alumina source and the silica source are at least amorphous silica and aluminum sulfate or amorphous aluminosilicate. Of these, amorphous aluminosilicate is preferred. In the amorphous aluminosilicate, the $SiO_2/Al_2O_3$ ratio may be 10 or more, 15 or more or 20 or more, may be 10000 or less, 1000 or less or 80 or less, and is preferably 10 or more and 10000 or less, 15 or more and 1000 or less or 20 or more and 80 or less.

When another starting raw material contained in the raw material composition contains aluminum, this starting raw material may be used as the alumina source. For example, when the silica source contains aluminum, the silica source can also be regarded as the alumina source. Examples of such a silica source include amorphous aluminosilicate in which the aluminum content calculated as $Al_2O_3$ is 0.001% by mass or more and 1.000% by mass or less based on the total mass of the silica source.

The alkali source is at least one of an alkali metal and a compound containing an alkali metal element and is at least one selected from the group consisting of hydroxides, carbonates, sulfates, chlorides, bromides, silicates and iodides of alkali metals, preferably at least one selected from the group consisting of hydroxides, chlorides, bromides and iodides of alkali metals and more preferably a hydroxide of an alkali metal.

The alkali metal element may be at least one selected from the group consisting of sodium, potassium, rubidium and cesium and is preferably at least one of sodium and potassium and more preferably sodium.

The raw material composition contains normal butylamine (which is hereinafter referred to also as "NBA"). In this case, the D50 of the crystallized MFI zeolite is unlikely to be large, and the MFI zeolite obtained readily exhibits high adsorption performance for organic compounds. It is only necessary that the raw material composition contain NBA as an SDA source, and it is preferable that only NBA serves as the SDA source. However, the raw material composition may contain an SDA source that directs the formation of the MFI structure in addition to NBA. The SDA source other than NBA is at least one amine selected from the group consisting of di-normal butylamine, tributylamine, di-normal propylamine, tripropylamine, dipropylenetriamine, dihexamethylenetriamine, triethylenetetramine, diethylenetriamine, ethanolamine and propanolamine, at least one quaternary ammonium cation selected from tetrapropylammonium and tetraethylammonium or at least one selected from the group consisting of glycerol, alcohols and morpholine.

The water may be at least one selected from the group consisting of distilled water, deionized water and pure water. Water derived from other starting materials contained in the raw material composition such as a solvent and a water-containing compound is regarded as part of the water in the raw material composition.

To reduce the cost of the raw materials, the raw material composition need not contain seed crystals. However, the raw material composition may contain a sufficiently small amount of seed crystals relative to the amount of the silica source and the alumina source because the treatment time required for crystallization can be reduced.

The seed crystals are preferably an MFI zeolite, and the $SiO_2/Al_2O_3$ ratio of the MFI zeolite is preferably 10 or more and 4000 or less.

In the seed crystals contained in the raw material composition, the ratio of the total mass of aluminum and silicon, calculated as $Al_2O_3$ and $SiO_2$, respectively, in the seed crystals to the total mass of aluminum and silicon, calculated as $Al_2O_3$ and $SiO_2$, respectively, in the raw material composition (containing no seed crystals) (this ratio is hereinafter referred to also as the "seed crystal content") may be 0% by mass or more or 1% by mass or more and may be 20% by mass or less or 10% by mass or less. For example, the seed crystal content is preferably 0% by mass or more and 20% by mass or less, more than 0% by mass and 20% by mass or less or 1% by mass or more and 10% by mass or less.

The chemical composition of the raw material composition is preferably the following molar composition.

$SiO_2/Al_2O_3$ ratio = 50 or more, 200 or more or 1000 or more and
1500 or less, 3000 or less or 5000 or less
$NBA/SiO_2$ ratio = 0.01 or more, 0.05 or more or 0.10 or more and
0.30 or less, 0.50 or less or 0.70 or less
$M/SiO_2$ ratio = 0.01 or more, 0.05 or more or 0.10 or more and
0.20 or less, 0.40 or less or 0.60 or less
$OH/SiO_2$ ratio = 0.01 or more, 0.05 or more or 0.10 or more and
0.20 or less, 0.40 or less or 0.60 or less
$H_2O/SiO_2$ ratio = 2 or more, 6 or more or 8 or more and
100 or less, 50 or less or 20 or less
Here, M represents an alkali metal element. When two or more alkali metal elements are used, M is the total amount of the metal elements. For example, when the alkali metal element M includes sodium (Na) and potassium (K), M is (Na + K).

A particularly preferred chemical composition of the raw material composition is the following molar composition.
$SiO_2/Al_2O_3$ ratio = 100 or more and 5000 or less,

preferably 200 or more and 4500 or less and
more preferably 1000 or more and 4500 or less

$NBA/SiO_2$ ratio = 0.05 or more and 0.30 or less and preferably 0.10 or more and 0.30 or less
$M/SiO_2$ ratio = 0.01 or more and 0.30 or less and
preferably 0.05 or more and 0.20 or less
$OH/SiO_2$ ratio = 0.01 or more 0.30 or less and
preferably 0.05 or more and 0.20 or less
$H_2O/SiO_2$ ratio = 5 or more and 50 or less and
preferably 8 or more and 15 or less

In the present embodiment, it is preferable that the raw material composition does not contain fluorine (F) and fluorine-containing compounds (which are hereinafter referred to also as "fluorine etc."). The fluorine etc. are particularly highly corrosive, and a production method using the fluorine etc. requires a special production facility with corrosion resistance. In this case, the production cost is likely to increase. Therefore, it is preferable that the raw material composition contains no fluorine. The content of fluorine in the raw material composition is preferably 100 ppm by mass or less or 1 ppm by mass or less, is preferably 0 ppm by mass or more or more than 0 ppm by mass, and is, for example, 0 ppm by mass or more and 100 ppm by mass or less, 0 ppm by mass or more and 1 ppm by mass or less and more than 0 ppm by mass and 1 ppm by mass or less.

In the crystallization step, the raw material composition is subjected to hydrothermal treatment at 100°C or higher and 150°C or lower and 0.15 MPa or higher. In this manner, the raw material composition is crystallized.

If the hydrothermal treatment temperature is lower than 100°C, the time required to crystallize the raw material composition is very long. If the hydrothermal treatment temperature exceeds 150°C, the secondary particle size, particularly the D50, becomes excessively large. Therefore, the hydrothermal treatment temperature is 100°C or higher and 150°C or lower and is preferably 115°C or higher and 150°C or lower.

The pressure of the hydrothermal treatment (the hydrothermal treatment pressure) is 0.15 MPa or higher. If the pressure is less than 0.15 MPa, the crystallinity of the MFI zeolite obtained is low, and the adsorption performance deteriorates. The hydrothermal treatment pressure is preferably 0.15 MPa or higher and 0.70 MPa or lower and more preferably 0.20 MPa or higher and 0.50 MPa or lower.

In the present embodiment, the pressure (hydrothermal treatment pressure) may be adjusted within the above-described value range by, for example, at least one method selected from the group consisting of autogenous pressurization, a method in which atmospheric gas is introduced or sucked and a method in which the volume of a sealed vessel containing the raw material composition is reduced or increased.

In the present embodiment, the value of the pressure (hydrothermal treatment pressure) is the value of the absolute pressure. The absolute pressure is the sum of the atmospheric pressure and the gage pressure.

During the hydrothermal treatment, the raw material composition may be stirred or left to stand and is preferably stirred. The stirring speed may be appropriately adjusted according to the scale and structure of the device used for crystallization and is, for example, 30 rpm or more and 500 rpm or less or 40 rpm or more and 400 rpm or less.

The hydrothermal treatment time may be adjusted according to the amount of the raw material composition used for the hydrothermal treatment and the crystallization temperature. The crystallization time that is industrially acceptable may be, for example, 5 hours or longer or 10 hours or longer, may be 300 hours or shorter, 200 hours or shorter or 100 hours or shorter, and is, for example, 5 hours or longer and 300 hours or shorter or 10 hours or longer and 50 hours or shorter.

The hydrothermal treatment in the crystallization step is performed with the raw material composition placed in a sealed vessel. It is only necessary that the sealed vessel can contain the raw material composition in a sealed manner and have sufficient resistance to pressure generated during the hydrothermal treatment.

In the crystallization step, hydrothermal treatment is next performed at 100°C or higher and 150°C or lower while the pressure is reduced at a pressure reduction rate of 0.10 MPa/hour or higher (this hydrothermal treatment is hereinafter referred to also as "reduced-pressure hydrothermal treatment"). This allows the raw material composition to crystallize directly into the MFI zeolite having the D50 specified in the present embodiment. Although the reason that the MFI zeolite having the D50 specified in the present embodiment can be directly crystallized by performing the hydrothermal treatment at the pressure reduction rate and temperature described above is unclear, a possible reason is as follows. By reducing the pressure at a pressure reduction rate of 0.10 MPa/hour or higher, the raw material composition inside the sealed vessel undergoes rolling motion, and aggregation of crystallized particles is suppressed, so that the MFI zeolite having a D50 of 0.5 $\mu$m or more and 5.0 $\mu$m or less can be directly crystallized.

In the crystallization step, the temperature at which the heat treatment is performed while the pressure is reduced (which is hereinafter referred to also as "reduced-pressure hydrothermal treatment temperature") is adjusted to 100°C or higher and 150°C or lower, and this allows the MFI zeolite having the D50 specified in the present embodiment to be obtained. If this temperature is lower than 100°C, the primary particles of the MFI zeolite are likely to aggregate, and the D50 becomes excessively large. The reduced-pressure hydrothermal treatment temperature may be 105 or higher or 110°C or higher, may be 140°C or lower or 130°C or lower, and is preferably 105°C or higher and 140°C or lower and more preferably 110°C or higher and 130°C or lower.

The pressure reduction rate in the crystallization step is 0.10 MPa/hour or higher. If the pressure reduction rate is less than 0.10 MPa/hour, the D50 is likely to increase. The pressure reduction rate is preferably 0.10 MPa/hour or higher and 0.30 MPa/hour or lower and more preferably 0.15 MPa/hour or higher and 0.30 MPa/hour or lower.

The difference between the pressure at the start of the reduced-pressure hydrothermal treatment and the pressure at the end of the treatment is preferably 0.03 MPa or higher and 0.40 MPa or lower, more preferably 0.10 MPa or higher and 0.40 MPa or lower and still more preferably 0.10 MPa or higher and 0.35 MPa or lower. In this case, the D50 is likely to be smaller, and the handleability of the slurry containing the MFI zeolite tends to increase.

The pressure at the start of the reduced-pressure hydrothermal treatment is preferably 0.15 MPa or higher and 0.70 MPa or lower and more preferably 0.20 MPa or higher and 0.50 MPa or lower.

When the indicated pressure value is maintained within $\pm$5 kPa (0.005 MPa) of the indicated value (this state is hereinafter referred to also as the "stable state") for 1 hour or longer after the start of the reduced-pressure hydrothermal treatment, the reduced-pressure hydrothermal treatment is terminated. It is only necessary that the stable state be maintained for 1 hour or longer, and the stable state is maintained for, for example, 1 hour or longer and 10 hours or shorter.

The production method in the present embodiment may include, after the crystallization step, at least one selected from the group consisting of a washing step, a drying step, a structure-directing agent removing step and a cation exchange step.

In the washing step, the zeolite and the liquid phase are subjected to solid-liquid separation. In the washing step, the solid-liquid separation may be performed by a well-known method, and the zeolite obtained as the solid phase may be washed with pure water.

In the drying step, water physically adsorbed on the zeolite is removed. Any drying conditions can be used. For example, the zeolite is left to stand in air at 50°C or higher and 250°C or lower for 1 hour or longer and 120 hours of shorter or dried using a spray dryer.

In the structure-directing agent removing step, the SDA contained in the zeolite is removed. The method for removing the SDA is, for example, at least one selected from the group consisting of exchange treatment using a resin, pyrolysis treatment and firing treatment. From the viewpoint of production efficiency, the structure-directing agent removing step is at least one of pyrolysis treatment and firing treatment. When the firing treatment is used, the firing conditions are appropriately controlled according to the amount of the zeolite to be treated. For example, the firing treatment is performed in air at 400°C or higher and 700°C or lower for 1 hour or longer and 24 hours or shorter.

In some cases, the crystallized MFI zeolite contains an alkali metal element derived from the alkali source on ion exchange sites. In the cation exchange step, the alkali metal element is subjected to cation exchange with non-metallic cations such as ammonium cations ($NH_4^+$) and protons ($H^+$). Examples of the cation exchange with ammonium cations include a method in which the MFI zeolite is brought into contact with an aqueous ammonium chloride solution. Examples of the cation exchange with protons include a method in which the MFI zeolite is brought into contact with hydrochloric acid.

[EXAMPLES]

The present disclosure will next be described by way of Examples. However, the present disclosure is not limited to the following Examples.

(Identification of crystal phases)

A powder X-ray diffraction apparatus (device name: Ultima IV manufactured by Rigaku Corporation) was used to obtain an XRD pattern under the following conditions.

Acceleration current-voltage: 40 mA-40 kV
Radiation source: CuK$\alpha$ line ($\lambda$ = 1.5405 Å)
Measurement mode: Continuous scanning
Scanning condition: 10°/minute
Measurement range: $2\theta$ = 5° to 40°
Divergence height limiting slit: 10 mm
Divergence/incident slit: 1°
Scattering slit: Open
Receiving slit: Open
Detector: Semiconductor detector (D/teX Ultra 2)
Filter: Not used

The obtained XRD pattern was compared with an XRD pattern described in Zeolite Framework Type MFI at the homepage of the Structure Commission of the IZA (http://www.iza-structure.org/databases/) to thereby identify the crystal structure of the sample.

(Volume-based particle size distribution)

Regarding the volume-based particle size distribution, frequency and cumulative curves of the volume-based particle size distribution were measured using a laser diffraction-scattering particle size distribution measurement device (device name; Microtrac MT3300 EXII manufactured by MicrotracBEL Corp.). The measurement conditions are as follows.

Measurement range: 0.02 to 2000 µm
Refractive index of particles: 1.66
Transparency of particles: Transparent
Shape of particles: Non-spherical
Refractive index of solvent: 1.333
Ultrasonic pre-treatment: None

The obtained volume-based cumulative particle size distribution was used to determine the D10, D50 and D90. The obtained D10, D50 and D90 values were used to compute the standard deviation using the following formula.

$$\text{Standard deviation [µm]} = (\text{D90 [µm]} - \text{D10 [µm]}) / 2$$

The shape of the volume-based frequency particle size distribution curve was checked.

(Average crystal size)

SEM observation was performed using a general scanning electron microscope (device name: JSM-IT200 manufactured by JEOL Ltd.) under the following conditions.
Acceleration voltage: 6 kV
Magnification: $10,000 \pm 5,000$X

The average crystal size was determined as follows. First, $100 \pm 10$ primary particles having continuous outlines in the SEM observation image were extracted. Then the largest diameters of the extracted primary particles were measured, and the average of the measured diameters was determined and used as the average crystal size.

(Composition analysis)

To perform composition analysis, a sample was dissolved in an aqueous solution mixture of hydrofluoric acid and nitric acid to prepare a sample solution. The sample solution was subjected to inductively coupled plasma emission spectroscopic analysis (ICP-AES) using a general ICP device (device name: OPTIMA 5300DV manufactured by PerkinElmer) to perform measurement. The $SiO_2/Al_2O_3$ ratio and the Na content (alkali metal content) of the sample were determined using the obtained measurement values for Si, Al and Na.

(BET specific surface area)

The BET specific surface area of a sample was determined by measurement according to JIS Z 8830:2013. A general specific surface area measuring device (device name: BELSORP-mini II manufactured by MicrotracBEL Corp.) was used for the measurement. The measurement sample was subjected to pretreatment, i.e., held in a vacuum atmosphere (10 Pa or lower) at 350°C for 2 hours. The BET specific surface area of the pretreated sample was measured by a one point method using nitrogen as adsorption gas.

(Toluene adsorption amount)

The toluene adsorption amount was measured using a general vapor adsorption measurement device (device name: BELSORP-max II manufactured by MicrotracBEL Corp.) by the following method. The MFI zeolite was subjected to pretreatment. Specifically, 20 mg of the MFI zeolite was placed in a 11 $cm^3$ sample tube and held in a vacuum atmosphere (10 Pa or lower) at 350°C for 2 hours to prepare a measurement sample. The sample tube containing the measurement sample was placed in the vapor adsorption measurement device, and the equilibrium pressure was changed from 0.001 kPa to 1 kPa at 25°C to measure the toluene adsorption amounts [% by mass] at 0.005 kPa, 0.01 kPa, 0.1 kPa and 1 kPa.

(Viscosity measurement)

The viscosity was measured using a general viscometer (device name: MCR 92 manufactured by Anton Paar). A measurement sample was washed, subjected to solid-liquid separation, and mixed with pure water to obtain a zeolite slurry with a solid concentration of 51% by mass, and the zeolite slurry was used as a sample slurry. 2 mL of the sample slurry was dropped onto a stage of the measurement device with a flat plate-type measurement jig (PP50) attached thereto, and then the shear rate was changed from 100 s$^{-1}$ to 1200 s$^{-1}$ to measure the viscosity [mPa·s] at a shear rate of 1100 s$^{-1}$. In the measurement, the stage temperature was adjusted to 20°C, and the gap between the measurement jig and the stage was adjusted to 0.2 mm.

Example 1

NBA, pure water, sodium hydroxide and amorphous silicon with an $Al_2O_3$ content of 0.04% by mass were mixed to obtain a raw material composition having the following molar composition.
$SiO_2/Al_2O_3$ ratio = 4100
$Na/SiO_2$ ratio = 0.11
$NBA/SiO_2$ ratio = 0.23
$H_2O/SiO_2$ ratio = 11
$OH/SiO_2$ ratio = 0.11

Seed crystals (MFI zeolite manufactured by TOSOH Corporation, $SiO_2/Al_2O_3$ ratio: 2015) were mixed with the raw material composition such that the seed crystal content was 1.0% by mass, and then 3600 g of the resulting raw material composition was placed in a sealed vessel having a volume of 4 L. The raw material composition was subjected to hydrothermal treatment at a pressure of 0.31 MPa and 120°C for 24 hours under stirring at 350 rpm and then to hydrothermal treatment at 120°C while the hydrothermal treatment pressure was reduced to 0.20 MPa at a pressure reduction rate of 0.20 MPa/hour. After the hydrothermal treatment, the temperature was reduced to 70°C, and the crystallized product was collected and used as an MFI zeolite in the present Example.
The MFI zeolite in the present Example had a single phase MFI structure and was an MFI zeolite (crystalline aluminosilicate) with a (020)/(101) peak ratio of 76% and a (101)/(501) peak ratio of 67%. The XRD pattern of the zeolite is shown in the following table.

[Table 4]

| Interplanar spacing d (Å) | Relative intensity (%) |
|---|---|
| 11.02 | 67 |
| 9.95 | 51 |
| 9.63 | 13 |
| 5.96 | 11 |
| 3.84 | 100 |
| 3.80 | 75 |
| 3.70 | 46 |
| * Relative intensity is relative value with respect to peak intensity at d = 3.84 Å | |

In the MFI zeolite in the present Example, the $SiO_2/Al_2O_3$ ratio was 2500, and the average crystal size was 1.25 $\mu$m. The Na content (alkali metal content) was 0.4% by mass, and the BET specific surface area was 392 m$^2$/g. Regarding the particle sizes, D10 was 0.77 $\mu$m, D50 was 1.64 $\mu$m, and D90 was 3.05 $\mu$m, with a standard deviation of 1.14 $\mu$m. The volume-based frequency particle size distribution curve was monomodal.

Example 2

NBA, pure water, sodium hydroxide and amorphous silicon with an $Al_2O_3$ content of 0.77% by mass were mixed to obtain a raw material composition having the following molar composition.
$SiO_2/Al_2O_3$ ratio = 220
$Na/SiO_2$ ratio = 0.11
$NBA/SiO_2$ ratio = 0.23
$H_2O/SiO_2$ ratio = 11
$OH/SiO_2$ ratio = 0.11

Seed crystals (MFI zeolite manufactured by TOSOH Corporation, $SiO_2/Al_2O_3$ ratio: 2015) were mixed with the raw material composition such that the seed crystal content was 1.0% by mass, and then 3600 g of the resulting raw material composition was placed in a sealed vessel with a volume of 4 L. The raw material composition was subjected to hydrothermal treatment at a pressure of 0.40 MPa and 130°C for 36 hours under stirring at 350 rpm and then to hydrothermal treatment at 130°C while the pressure was reduced to 0.27 MPa at a pressure reduction rate of 0.20 MPa/hour. After the hydrothermal treatment, the sealed vessel was cooled to 70°C, and the crystallized product was collected and used as an MFI zeolite in the present Example.

The MFI zeolite in the present Example had a single phase MFI structure and was an MFI zeolite (crystalline aluminosilicate) with a (020)/(101) peak ratio of 78% and a (101)/(501) peak ratio of 65%. The XRD pattern of the zeolite is shown in the following table.

[Table 5]

| Interplanar spacing d (Å) | Relative intensity (%) |
|---|---|
| 11.07 | 65 |
| 9.97 | 51 |
| 9.67 | 12 |
| 5.98 | 12 |
| 3.85 | 100 |
| 3.81 | 73 |
| 3.71 | 45 |
| * Relative intensity is relative value with respect to peak intensity at d = 3.85 Å | |

In the MFI zeolite in the present Example, the $SiO_2/Al_2O_3$ ratio was 200, and the average crystal size was 1.16 $\mu$m. The Na content (alkali metal content) was 0.3% by mass, and the BET specific surface area was 381 m$^2$/g. Regarding the particle sizes, D10 was 1.40 $\mu$m, D50 was 2.69 $\mu$m, and D90 was 7.14 $\mu$m, with a standard deviation of 2.87 $\mu$m. The volume-based frequency particle size distribution curve was monomodal.

Example 3

The MFI zeolite in Example 1 was brought into contact with 7% by mass hydrochloric acid at 25°C for 5 minutes, washed with pure water, then subjected to solid-liquid separation, and dried in an air atmosphere at 110°C for 12 hours to thereby obtain an MFI zeolite in the present Example.

The MFI zeolite in the present Example had a single phase MFI structure and was an MFI zeolite (crystalline aluminosilicate) with a (020)/(101) peak ratio of 82% and a (101)/(501) peak ratio of 105%. The XRD pattern of the zeolite is shown in the following table.

[Table 6]

| Interplanar spacing d (Å) | Relative intensity (%) |
|---|---|
| 11.10 | 105 |
| 9.97 | 86 |
| 9.79 | 40 |
| 5.98 | 27 |
| 3.85 | 100 |
| 3.81 | 94 |
| 3.71 | 44 |
| * Relative intensity is relative value with respect to peak intensity at d = 3.85 Å | |

In the MFI zeolite in the present Example, the $SiO_2/Al_2O_3$ ratio was 2500, and the average crystal size was 1.25 $\mu$m. The Na content (alkali metal content) was 0.01% by mass, and the BET specific surface area was 338 m$^2$/g. Regarding

the particle sizes, D10 was 0.77 $\mu$m, D50 was 1.64 $\mu$m, and D90 was 3.05 $\mu$m, with a standard deviation of 1.14 $\mu$m. The volume-based frequency particle size distribution curve was monomodal.

Example 4

The MFI zeolite in Example 1 was subjected to heat treatment in an air atmosphere at 600°C for 2 hours to thereby obtain an MFI zeolite in the present Example.

The MFI zeolite in the present Example had a single phase MFI structure and was an MFI zeolite (crystalline aluminosilicate) with a (020)/(101) peak ratio of 82% and a (101)/(501) peak ratio of 137%. The XRD pattern of the zeolite is shown in the following table.

[Table 7]

| Interplanar spacing d (Å) | Relative intensity (%) |
|---|---|
| 11.07 | 137 |
| 9.93 | 112 |
| 9.75 | 59 |
| 5.98 | 32 |
| 3.85 | 100 |
| 3.82 | 79 |
| 3.71 | 51 |
| * Relative intensity is relative value with respect to peak intensity at d = 3.85 Å | |

In the MFI zeolite in the present Example, the $SiO_2/Al_2O_3$ ratio was 2500, and the average crystal size was 1.25 $\mu$m. The Na content (alkali metal content) was 0.4% by mass, and the BET specific surface area was 392 m$^2$/g. Regarding the particle sizes, D10 was 0.77 $\mu$m, D50 was 1.64 $\mu$m, and D90 was 3.05 $\mu$m, with a standard deviation of 1.14 $\mu$m. The volume-based frequency particle size distribution curve was monomodal.

Example 5

NBA, pure water, sodium hydroxide and amorphous silicon with an $Al_2O_3$ content of 0.08% by mass were mixed to obtain a raw material composition having the following molar composition

$SiO_2/Al_2O_3$ ratio = 2100
$Na/SiO_2$ ratio = 0.11
$NBA/SiO_2$ ratio = 0.23
$H_2O/SiO_2$ ratio = 11
$OH/SiO_2$ ratio = 0.11

Seed crystals (MFI zeolite manufactured by TOSOH Corporation, $SiO_2/Al_2O_3$ ratio: 2015) were mixed with the raw material composition such that the seed crystal content was 1.0% by mass, and then 3600 g of the resulting raw material composition was placed in a sealed vessel with a volume of 4 L. The raw material composition was subjected to hydrothermal treatment at a pressure of 0.30 MPa and 120°C for 36 hours under stirring at 350 rpm and then to hydrothermal treatment at 120°C while the hydrothermal treatment pressure was reduced to 0.20 MPa at a pressure reduction rate of 0.20 MPa/hour. After the hydrothermal treatment, the temperature was reduced to 70°C, and the crystallized product was collected and used as an MFI zeolite in the present Example.

The MFI zeolite in the present Example had a single phase MFI structure and was an MFI zeolite(crystalline aluminosilicate) with a (020)/(101) peak ratio of 95% and a (101)/(501) peak ratio of 76%. The XRD pattern of the zeolite is shown in the following table.

[Table 8]

| Interplanar spacing d (Å) | Relative intensity (%) |
|---|---|
| 11.04 | 76 |

(continued)

| Interplanar spacing d (Å) | Relative intensity (%) |
|---|---|
| 9.91 | 71 |
| 9.73 | 39 |
| 5.96 | 14 |
| 3.84 | 100 |
| 3.81 | 102 |
| 3.71 | 49 |
| * Relative intensity is relative value with respect to peak intensity at d = 3.84 Å | |

In the MFI zeolite in the present Example, the $SiO_2/Al_2O_3$ ratio was 1500, and the average crystal size was 1.32 $\mu$m. The Na content (alkali metal content) was 0.5% by mass, and the BET specific surface area was 310 $m^2$/g. Regarding the particle sizes, D10 was 1.15 $\mu$m, D50 was 1.99 $\mu$m, and D90 was 3.17 $\mu$m, with a standard deviation of 1.01 $\mu$m. The volume-based frequency particle size distribution curve was monomodal.

Comparative Example 1

A raw material composition obtained using the same procedure as in Example 1 was subjected to hydrothermal treatment at a pressure of 0.31 MPa and 120°C for 24 hours under stirring at 350 rpm. After the hydrothermal treatment, the temperature was reduced to 30°C, and the crystallized product was collected and used as an MFI zeolite in the present Comparative Example.

The MFI zeolite in the present Comparative Example had a single phase MFI structure and was an MFI zeolite (crystalline aluminosilicate) with a (020)/(101) peak ratio of 75% and a (101)/(501) peak ratio of 65%. The XRD pattern of the zeolite is shown in the following table.

[Table 9]

| Interplanar spacing d (Å) | Relative intensity (%) |
|---|---|
| 11.10 | 65 |
| 10.00 | 49 |
| 9.69 | 13 |
| 5.98 | 12 |
| 3.85 | 100 |
| 3.81 | 75 |
| 3.71 | 47 |
| * Relative intensity is relative value with respect to peak intensity at d = 3.85 Å | |

In the MFI zeolite in the present Comparative Example, the $SiO_2/Al_2O_3$ ratio was 2500, and the average crystal size was 1.22 $\mu$m. The Na content (alkali metal content) was 0.4% by mass, and the BET specific surface area was 360 $m^2$/g. Regarding the particle sizes, D10 was 2.49 $\mu$m, D50 was 37.1 $\mu$m, and D90 was 76.1 $\mu$m, with a standard deviation of 36.8 $\mu$m. The volume-based frequency particle size distribution curve was bimodal.

Comparative Example 2

A raw material composition obtained using the same procedure as in Example 1 was subjected to hydrothermal treatment at a pressure of 0.31 MPa and 120°C for 24 hours and then cooled to 70°C. After cooling, hydrothermal treatment was performed at 70°C while the pressure was reduced to 0.10 MPa (atmospheric pressure) at a pressure reduction rate of 0.20 MPa/hour, and the crystallized product was collected and used as an MFI zeolite in the present Comparative Example.

The MFI zeolite in the present Comparative Example had a single phase MFI structure and was found to be an MFI zeolite (crystalline aluminosilicate) with a (020)/(101) peak ratio of 75% and a (101)/(501) peak ratio of 73%. The XRD pattern of the zeolite is shown in the following table.

[Table 10]

| Interplanar spacing d (Å) | Relative intensity (%) |
|---|---|
| 11.10 | 73 |
| 10.00 | 55 |
| 9.69 | 15 |
| 5.98 | 14 |
| 3.85 | 100 |
| 3.81 | 73 |
| 3.71 | 47 |
| * Relative intensity is relative value with respect to peak intensity at d = 3.85 Å | |

In the MFI zeolite in the present Comparative Example, the $SiO_2/Al_2O_3$ ratio was 2600, and the average crystal size was 1.29 $\mu$m. The Na content (alkali metal content) was 0.4% by mass. Regarding the particle sizes, D10 was 1.86 $\mu$m, D50 was 8.29 $\mu$m, and D90 was 38.8 $\mu$m, with a standard deviation of 18.5 $\mu$m. The volume-based frequency particle size distribution curve was bimodal.

Comparative Example 3

The MFI zeolite in Comparative Example 1 was ground by the following method. Specifically, the MFI zeolite obtained in Comparative Example 1 was mixed with pure water to obtain a zeolite slurry with a solid concentration of 30% by mass. Glass beads with a diameter of 1 mm and the zeolite slurry were placed in a wet grinder (device name: DYNO-MILL MULTI LAB manufactured by WAB) such that the ratio of the volume of the glass beads to the volume of the wet grinder was 80% and the ratio of the volume of the zeolite slurry was 20%, and the zeolite slurry was ground at a peripheral speed of 10 m/s for 10 minutes to thereby obtain a ground product.

The ground product was brought into contact with 7% by mass hydrochloric acid at 25°C for 5 minutes, washed with pure water, then subjected to solid-liquid separation, and dried in an air atmosphere at 110°C for 12 hours to thereby obtain an MFI zeolite in the present Comparative Example.

The MFI zeolite in the present Comparative Example had a single phase MFI structure and was an MFI zeolite (crystalline aluminosilicate) with a (020)/(101) peak ratio of 99% and a (101)/(501) peak ratio of 106%. It was found that, since the MFI zeolite in the present Comparative Example had been subjected to grinding, its crystallinity was lower than that of the MFI zeolites in the Examples. The XRD pattern of the zeolite in the present Comparative Example is shown in the following table.

[Table 11]

| Interplanar spacing d (Å) | Relative intensity (%) |
|---|---|
| 11.07 | 106 |
| 9.91 | 105 |
| 9.75 | 51 |
| 5.97 | 27 |
| 3.84 | 100 |
| 3.81 | 106 |
| 3.70 | 44 |
| * Relative intensity is relative value with respect to peak intensity at d = 3.84 Å | |

In the MFI zeolite in the present Comparative Example, the $SiO_2/Al_2O_3$ ratio was 2500, and the average crystal size was 0.96 $\mu$m. The Na content (alkali metal content) was 0.01% by mass, and the BET specific surface area was 320 $m^2/g$. Regarding the particle sizes, D10 was 0.52 $\mu$m, D50 was 0.88 $\mu$m, and D90 was 1.76 $\mu$m, with a standard deviation of 0.62. The volume-based frequency particle size distribution curve was monomodal.

Comparative Example 4

NBA, pure water, sodium hydroxide and amorphous silicon with an $Al_2O_3$ content of 6.0% by mass were mixed to obtain a raw material composition having the following molar composition.
$SiO_2/Al_2O_3$ ratio = 26
$Na/SiO_2$ ratio = 0.20
$NBA/SiO_2$ ratio = 0.23
$H_2O/SiO_2$ ratio = 11
$OH/SiO_2$ ratio = 0.20

Seed crystals (MFI zeolite manufactured by TOSOH Corporation, $SiO_2/Al_2O_3$ ratio: 2015) were mixed with the raw material composition such that the seed crystal content was 1.0% by mass, and then 3600 g of the resulting raw material composition was placed in a sealed vessel with a volume of 4 L. The raw material composition was subjected to hydrothermal treatment at a pressure of 0.41 MPa and 150°C for 36 hours under stirring at 350 rpm and then to hydrothermal treatment at 130°C while the pressure was reduced to 0.27 MPa at a pressure reduction rate of 0.22 MPa/hour. After the hydrothermal treatment, the sealed vessel was cooled to 70°C, and the crystallized product was collected and used as an MFI zeolite in the present Comparative Example.
The MFI zeolite in the present Comparative Example had a single phase MFI structure and was an MFI zeolite (crystalline aluminosilicate) with a (020)/(101) peak ratio of 76% and a (101)/(501) peak ratio of 54%. The XRD pattern of the zeolite is shown in the following table.

[Table 12]

| Interplanar spacing d (Å) | Relative intensity (%) |
|---|---|
| 11.10 | 54 |
| 9.97 | 41 |
| 5.98 | 12 |
| 3.84 | 100 |
| 3.72 | 48 |
| * Relative intensity is relative value with respect to peak intensity at d = 3.84 Å | |

In the MFI zeolite in the present Comparative Example, the $SiO_2/Al_2O_3$ ratio was 23, and the average crystal size was less than 0.1 $\mu$m. The Na content (alkali metal content) was 2.1% by mass, and the BET specific surface area was 298 $m^2$/g. Regarding the particle sizes, D10 was 5.38 $\mu$m, D50 was 33.7 $\mu$m, and D90 was 74.7 $\mu$m, with a standard deviation of 34.7 $\mu$m. The volume-based frequency particle size distribution curve was bimodal.

Comparative Example 5

NBA, pure water, sodium hydroxide and amorphous silicon with an $Al_2O_3$ content of 0.04% by mass were mixed to obtain a raw material composition having the following molar composition.
$SiO_2/Al_2O_3$ ratio = 3900
$Na/SiO_2$ ratio = 0.11
$NBA/SiO_2$ ratio = 0.23
$H_2O/SiO_2$ ratio = 11
$OH/SiO_2$ ratio = 0.11

Seed crystals (MFI zeolite manufactured by TOSOH Corporation, $SiO_2/Al_2O_3$ ratio: 2015) were mixed with the raw material composition such that the seed crystal content was 1.0% by mass, and then 3600 g of the resulting raw material composition was placed in a sealed vessel with a volume of 4 L. The raw material composition was subjected to hydrothermal treatment at a pressure of 1.0 MPa and 170°C for 36 hours under stirring at 350 rpm and then to hydrothermal treatment at 130°C while the hydrothermal treatment pressure was reduced to 0.27 MPa at a pressure reduction rate of 0.20 MPa/hour. After the hydrothermal treatment, the temperature was reduced to 70°C, and the crystallized product was collected and used as a zeolite in the present Comparative Example.

The zeolite in the present Comparative Example was amorphous (amorphous aluminosilicate).

Measurement Example 1 (measurement of viscosity of zeolite slurry)

The MFI zeolites in Examples 1 and 2 and Comparative Examples 1, 2 and 4 were each mixed with pure water to prepare zeolite slurries with a solid concentration of 51% by mass, and the viscosity of each zeolite slurry was measured. The results are shown in the following table.

[Table 13]

|  | Viscosity at shear rate of 1100 s$^{-1}$ [mPa·s] |
| --- | --- |
| Example 1 | 12 |
| Example 2 | 5 |
| Comparative Example 1 | 888 |
| Comparative Example 2 | 93 |
| Comparative Example 4 | 571 |

As can be seen from the above table, in the MFI zeolites in the Examples, the viscosity of the zeolite slurry at a shear rate of 1100 s$^{-1}$ was lower than those of the MFI zeolites in the Comparative Examples. Therefore, it was found that the handleability of the zeolite slurries prepared using the MFI zeolites in the Examples produced without using grinding and dispersants was better than that of the zeolite slurries prepared using the MFI zeolites in the Comparative Examples.

Measurement Example 2 (measurement of toluene adsorption amount)

The toluene adsorption amount of each of the MFI zeolites in Examples 1 to 5 and Comparative Example 3 was measured. The results are shown in tables below.

[Table 14]

|  | Toluene adsorption amount [% by mass] | | | |
| --- | --- | --- | --- | --- |
|  | 0.005 kPa | 0.01 kPa | 0.1 kPa | 1 kPa |
| Example 1 | 6.0 | 6.6 | 7.8 | 9.3 |
| Example 2 | 5.6 | 6.8 | 8.2 | 9.8 |
| Example 5 | 6.5 | 8.0 | 9.5 | 11.2 |
| Comparative Example 3 | 5.0 | 6.1 | 7.5 | 9.2 |

As can be seen from the above table, in the MFI zeolites in the Examples, the adsorbed amount of toluene was higher at each equilibrium pressure than that of the MFI zeolite in the Comparative Example.
In the MFI zeolite in Comparative Example 3, the (020)/(101) peak ratio was higher than 95%, i.e., the crystallinity was low. Therefore, the adsorbed amount of toluene at each equilibrium pressure was found to be low.

[Table 15]

|  | Toluene adsorption amount [% by mass] | | | |
| --- | --- | --- | --- | --- |
|  | 0.005 kPa | 0.01 kPa | 0.1 kPa | 1 kPa |
| Example 1 | 6.0 | 6.6 | 7.8 | 9.3 |
| Example 3 | 6.2 | 7.0 | 8.3 | 9.9 |
| Example 4 | 5.8 | 7.1 | 8.6 | 12.6 |

In Example 3, the Na content was 0.1% by mass or less. Therefore, the toluene adsorption amount at each equilibrium pressure was found to be larger than that in Example 1. In Examples 3 and 4, the (101)/(501) peak ratio was 80% or more and 140% or less. Therefore, the toluene adsorption amounts at an equilibrium pressure of 0.01 kPa or higher were found to be still higher than those in Example 1.

The entire contents of the description, claims and abstract of Japanese Patent Application No. 2023-62985 filed on April 7, 2023 and the entire contents of the description, claims and abstract of Japanese Patent Application No. 2023-198053 filed on November 22, 2023 are cited herein and incorporated as the disclosure of the present description.

**Claims**

1. An MFI zeolite, wherein the MFI zeolite has a volume-based cumulative particle size distribution with a D50 of 0.5 $\mu$m or more and 5.0 $\mu$m or less, and wherein, in a powder X-ray diffraction pattern of the MFI zeolite, a ratio of a height of a (020) plane peak to a height of a (101) plane peak is 65% or more and 95% or less.

2. The MFI zeolite according to claim 1, wherein a molar ratio of silica to alumina is 50 or more and 3000 or less.

3. The MFI zeolite according to claim 1 or 2, wherein the MFI zeolite has a monomodal volume-based frequency particle size distribution curve.

4. The MFI zeolite according to claim 1 or 2, wherein the MFI zeolite has a volume-based particle size distribution with a standard deviation of 10 $\mu$m or less.

5. The MFI zeolite according to claim 1 or 2, wherein the MFI zeolite has an average crystal size of 0.1 $\mu$m or more and 5.0 $\mu$m or less.

6. The MFI zeolite according to claim 1 or 2, wherein the MFI zeolite has a BET specific surface area of 300 m$^2$/g or more.

7. A method for producing the MFI zeolite according to claim 1 or 2, the method comprising the step of subjecting a composition containing a silica source, an alumina source, an alkali source, normal butylamine and water to hydrothermal treatment at 100°C or higher and 150°C or lower and 0.15 MPa or higher and then to hydrothermal treatment at 100°C or higher and 150°C or lower while pressure is reduced at a pressure reduction rate of 0.10 MPa/hour or higher.

## INTERNATIONAL SEARCH REPORT

| International application No. |
| --- |
| **PCT/JP2024/013952** |

### A. CLASSIFICATION OF SUBJECT MATTER

*C01B 39/38*(2006.01)i; *C01B 39/36*(2006.01)i; *B01J 20/18*(2006.01)n
FI:  C01B39/38; C01B39/36; B01J20/18 A

According to International Patent Classification (IPC) or to both national classification and IPC

### B. FIELDS SEARCHED

Minimum documentation searched (classification system followed by classification symbols)

C01B33/20-39/54; B01J20/00-20/34

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
| --- | --- | --- |
| X | CN 106904634 A (PETROCHINA COMPANY LIMITED) 30 June 2017 (2017-06-30) examples 6-7, claims, paragraphs [0008]-[0027], [0058]-[0059], fig. 5-6 | 1, 3-6 |
| A | WO 2013/147261 A1 (JX NIPPON OIL & ENERGY CORPORATION) 03 October 2013 (2013-10-03) entire text, all drawings | 1-7 |
| A | CN 102190317 A (CHINA PETROLEUM & CHEMICAL CORPORATION) 21 September 2011 (2011-09-21) entire text | 1-7 |
| A | WO 2017/142033 A1 (MIZUSAWA INDUSTRIAL CHEM) 24 August 2017 (2017-08-24) entire text, all drawings | 1-7 |
| A | WO 2019/235429 A1 (TOYOBO CO., LTD.) 12 December 2019 (2019-12-12) entire text, all drawings | 1-7 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **04 June 2024** | **18 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

| International application No.<br>**PCT/JP2024/013952** |
|---|

| Patent document<br>cited in search report | | | Publication date<br>(day/month/year) | Patent family member(s) | | Publication date<br>(day/month/year) |
|---|---|---|---|---|---|---|
| CN | 106904634 | A | 30 June 2017 | (Family: none) | | |
| WO | 2013/147261 | A1 | 03 October 2013 | US 2015/0328626 A1<br>entire text, all drawings<br>KR 10-2015-0005529 | A | |
| CN | 102190317 | A | 21 September 2011 | (Family: none) | | |
| WO | 2017/142033 | A1 | 24 August 2017 | SG 11201806560R<br>CN 108698017 | A<br>A | |
| WO | 2019/235429 | A1 | 12 December 2019 | KR 10-2021-0015932<br>CN 112218711<br>TW 202003103<br>JP 2019-209266<br>JP 2019-209267 | A<br>A<br>A<br>A<br>A | |

Form PCT/ISA/210 (patent family annex) (July 2022)

**EP 4 691 984 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021011422 A
- JP 2004067976 A
- JP 2023062985 A
- JP 2023198053 A